(19) Europäisches Patentamt
European Patent Office
Office européen des brevets

(11) **EP 4 718 381 A1**

(12) **EUROPEAN PATENT APPLICATION**

(43) Date of publication:
**01.04.2026 Bulletin 2026/14**

(21) Application number: **24203673.9**

(22) Date of filing: **30.09.2024**

(51) International Patent Classification (IPC):
**G06T 7/246** (2017.01)   **G06T 7/269** (2017.01)

(52) Cooperative Patent Classification (CPC):
**G06T 7/246; G06T 7/269;** G06T 2207/10016;
G06T 2207/20081; G06T 2207/20084

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicants:
• **TOYOTA JIDOSHA KABUSHIKI KAISHA
Aichi-ken, 471-8571 (JP)**
• **Czech Technical University in Prague
Institute of Experimental and Applied Physics
16000 Prague 6 (CZ)**

(72) Inventors:
• **CHUMERIN, Nikolay
1140 BRUSSELS (BE)**
• **SERÝCH, Jonáš
16000 PRAGUE (CZ)**
• **NEORAL, Michal
16000 PRAGUE (CZ)**
• **MATAS, Jirí
16000 PRAGUE (CZ)**

(74) Representative: **Cabinet Beau de Loménie
103, rue de Grenelle
75340 Paris Cedex 07 (FR)**

Remarks:
Amended claims in accordance with Rule 137(2)
EPC.

(54) **METHOD AND SYSTEM FOR TRACKING A PIXEL IN A VIDEO**

(57)    A computer-implemented method for tracking at least one pixel from a reference frame to a current frame in a video comprising the reference frame and the current frame, the at least one pixel having a known position in the reference frame, the method comprising:
- estimating a plurality of position candidates for the at least one pixel in the current frame, each position candidate being associated with an optical flow from the reference frame to the current frame;
- evaluating at least one score for each of the position candidates based on the reference frame, the current frame and the optical flow;
- determining the position of the at least one pixel in the current frame by selecting one of the position candidates or combining two or more of the position candidates based on the respective at least one score.

FIG. 4

# EP 4 718 381 A1

**Description**

BACKGROUND OF THE INVENTION

1. Field of the invention

The present disclosure relates to the field of computer vision, and more particularly to a method for tracking at least one pixel from a reference frame to a current frame in a video. The method may find applications in all kinds of industries, including the automotive industry, the manufacturing industry, video editing, motion estimation or tracking, 2D or 3D reconstruction, camera autocalibration, etc.

2. Description of Related Art

Optical flow estimation is a computer vision task aiming to determine the movement of pixels throughout a video. Reliable dense optical flow estimation has a significant enabling potential for diverse advanced computer vision applications, including structure-from-motion, video editing, and augmented reality. Optical flows may be used between consecutive frames for motion estimation in videos, but this does not enable to generate consistent and dense long-range motion trajectories for the pixels.

Traditionally, long-range dense tracking may be achieved by sequential chaining of optical flow (OF). Recently, Multi-Flow Tracker (MFT) [REF. 1] revisited flow chaining not only for consecutive frames, but also for temporally distant frame pairs. MFT produces long, dense trajectories by selecting the most reliable chain of optical flows for each tracked point. The flow chain reliability is determined by accumulating uncertainties and occlusion state computed for each optical flow vector in the flow chain. However, this uncertainty accumulation can lead to error accumulation and drift. Moreover, MFT is tightly coupled with the RAFT optical flow, but it has been shown that other optical flow methods perform better. Therefore, there is a need for another approach of reliability estimation for tracking methods.

The following references disclose various methods relating to the field of optical flow estimation and more generally the field of machine learning:

[REF. 1] Michal Neoral, Jonáš Šerých, and Jiri Matas. MFT: Long-term tracking of every pixel. In Proceedings of the IEEE/CVF Winter Conference on Applications of Computer Vision, pages 6837-6847, 2024.

[REF. 2] Maxime Oquab, Timothée Darcet, Théo Moutakanni, Huy Vo, Marc Szafraniec, Vasil Khalidov, Pierre Fernandez, Daniel Haziza, Francisco Massa, Alaaeldin El-Nouby, et al. Dinov2: Learning robust visual features without supervision. arXiv preprint arXiv:2304.07193, 2023.

[REF. 3] Kaiming He, Xiangyu Zhang, Shaoqing Ren, and Jian Sun. Deep residual learning for image recognition. In Proceedings of the IEEE conference on computer vision and pattern recognition, pages 770-778, 2016.

[REF. 4] Alexey Dosovitskiy, Philipp Fischer, Eddy Ilg, Philip Häusser, Caner Hazirba,s, Vladimir Golkov, Patrick van der Smagt, Daniel Cremers, and Thomas Brox. Flownet: Learning optical flow with convolutional networks. In ICCV, pages 2758-2766, Dec. 2015

[REF. 5] Klaus Greff, Francois Belletti, Lucas Beyer, Carl Doersch, Yilun Du, Daniel Duckworth, David J Fleet, Dan Gnanapragasam, Florian Golemo, Charles Herrmann, et al. Kubric: A scalable dataset generator. In Proceedings of the IEEE/CVF Conference on Computer Vision and Pattern Recognition, pages 3749-3761, 2022

[REF. 6] Zachary Teed and Jia Deng. RAFT: Recurrent all-pairs field transforms for optical flow. In European Conference on Computer Vision, pages 402-419. Springer, 2020.

[REF. 7] Xiaoyu Shi, Zhaoyang Huang, Dasong Li, Manyuan Zhang, Ka Chun Cheung, Simon See, Hongwei Qin, Jifeng Dai, and Hongsheng Li. FlowFormer++: Masked cost volume autoencoding for pretraining optical flow estimation. In Proceedings of the IEEE/CVF Conference on Computer Vision and Pattern Recognition, pages 1599-1610, 2023.

[REF. 8] Leslie N Smith and Nicholay Topin. Super-convergence: Very fast training of neural networks using large learning rates. In Artificial intelligence and machine learning for multi-domain operations applications, volume 11006, pages 369-386. SPIE, 2019.

[REF. 9] Johan Edstedt, Qiyu Sun, Georg Bökman, Mårten Wadenbäck, and Michael Felsberg. RoMa: Revisiting robust losses for dense feature matching. In Proceedings of the IEEE/CVF Conference on Computer Vision and Pattern Recognition, pages 19790-19800, 2024.

SUMMARY

In this respect, the present disclosure relates to a computer-implemented method for tracking at least one pixel from a reference frame to a current frame in a video comprising the reference frame and the current frame, the at least one pixel having a known position in the reference frame, the method comprising:

- estimating a plurality of position candidates for the at least one pixel in the current frame, each position candidate being associated with an optical flow from the reference frame to the current frame;
- evaluating at least one score for each of the position candidates based on the reference frame, the current frame and the optical flow;
- determining the position of the at least one pixel in the current frame by selecting one of the position candidates or combining two or more of the position candidates based on the respective at least one score.

For conciseness, the method is referred to hereinafter as the tracking method.

The at least one pixel comprises one pixel or a plurality of pixels. As used herein, for conciseness and unless the context indicates otherwise, "a", "an", and "the" are intended to refer to "at least one" or "each" and to include plural forms as well. Conversely, generic plural forms include the singular.

The video includes a sequence of frames, e.g. a sequence of images, at any desired regular or irregular sampling rate. The reference frame is a given frame of the video which may be the first (e.g. earliest) frame of the video, the last (e.g. latest) frame of the video, or any frame in-between. The position of the pixel in the reference frame is assumed to be known.

The current frame is another frame of the video, in which it is desired to determine the position of the pixel. The current frame is distinct from the reference frame. The current frame may be located in the video before or after the reference frame.

It is desired to track the pixel from the reference frame to the current frame. Tracking the pixel from the reference frame to the current frame does not mean that the tracking method needs to determine or even compute every position of the pixel in intermediate frames between the reference frame and the current frame, but only to determine the overall displacement of the pixel between the reference frame and the current frame.

The tracking method estimates a plurality of position candidates for the pixel in the current frame. Any position estimation method may be used in this respect, especially optical flow methods which output an optical flow from the reference frame to the current frame.

Then, the tracking method comprises evaluating at least one score for each of the position candidates. The score gives an objective basis for selecting one of the position candidates or combining two or more of the position candidates. Each position candidate may be rated with one or more score. Finally, on the basis of the evaluated score(s) (the "respective at least one score" meaning the at least one score of each of the selected or combined position candidates), the tracking method determines the position of the at least one pixel in the current frame by selecting one of the position candidates, e.g. the most likely one to represent the position of the pixel in the current frame or any suitable selection process, or by combining two or more of the position candidates, e.g. by a weighted average or any suitable combination process.

It is noteworthy that the at least one score is evaluated based on the reference frame, the current frame and the optical flow. In other words, a score evaluation function takes the reference frame, the current frame and the optical flow as inputs. As a consequence, the score evaluation is more relevant than a mere optical flow forward-backward consistency evaluation, because the reference frame and the current frame are taken into account too. In addition, the score evaluation can be carried out independently of the optical flow computation as it relies on the overall optical flow, and not on the intermediate chaining possibly used within the optical flow calculations. Not only does this enable to estimate the score directly for the optical flow between the reference frame and the current frame, without need for error-prone score accumulation, but this also decouples the optical flow computation from the score evaluation, thus enabling to easily update the underlying optical flow method without redesigning the score evaluation. Overall, the proposed tracking method is more robust, and experiments show that it produces significantly less false re-detections than prior methods such as MFT, thanks to independent quality estimation based on the current frame, the reference frame and the optical flow between those frames for each position candidate.

Naturally, further inputs may be considered for evaluating the score, such as depth maps, semantic or instance segmentation, etc., however these inputs should be derived from the current frame, the reference frame or the optical flow between those frames, and/or should be independent of the method used for estimating the position candidates.

Optionally, the at least one pixel comprises a plurality of pixels.

Optionally, the estimating and determining are carried out independently for each of the at least one pixel. The tracking method may provide for pixel-level tracking in the video, as opposed to object- or feature-level tracking. This provides more flexibility for various applications, in particular as no object model is needed.

Optionally, the at least one score is evaluated by a machine learning model taking the reference frame, the current frame and the optical flow as inputs. The machine learning model may comprise an artificial neural network, e.g. a convolutional neural network (CNN). Thanks to the machine learning model, the score(s) may be learnt, which makes the tracking method more generic.

Optionally, the evaluating comprises extracting reference features from the reference frame and current features from the current frame, and aligning the reference features and the current features to one another. Features, sometimes referred to as latent features or a latent representation, may be extracted from the respective frames by any suitable method, e.g. an encoder based on a machine learning model. The reference features are the features extracted from the reference frame, whereas the current features are the feature extracted from the current frame. Both the reference features and the current features may be extracted by a similar model (or even the same model), in order to ensure consistency between them.

Aligning the reference features and the current features to one another includes modifying at least one of them, e.g. through a geometrical transformation (e.g. warping), in order to compensate for the movement of the pixels (and, thus, of the features) that has occurred between the reference frame and the current frame. Thus, after aligning, features that are common to the reference frame and the current frame should be found at similar locations. This makes the score evaluation more accurate. The aligning may be carried out based on the optical flow, which precisely conveys the movements between the reference frame and the current frame.

Optionally, the evaluating comprises calculating a similarity between the reference features and the current features after aligning. The similarity conveys to what extent the reference features and the current features look like one another. For instance, the similarity may be calculated with one or more techniques selected among cost volume correlation, scalar multiplication, subtraction, cosine similarity, etc. These techniques are known per se in the art. The similarity may be calculated globally or, preferably, locally, e.g. in a neighborhood of the position candidate for the tracked pixel. Local calculation of the similarities leverages the feature alignment to avoid unnecessary increases in the computation amount.

Optionally, the at least one score takes into account non-visibility of the position candidate and/or an uncertainty of the position candidate. The non-visibility may quantify the likelihood of the at least one pixel not to be visible in the current frame, e.g. being occluded or out of view. The uncertainty may quantify the uncertainty associated to the estimating of the corresponding position candidate, in other words the quality of the optical flow estimation. The uncertainty and non-visibility may each be the basis of a dedicated score, and/or may be combined in one or more scores. Thanks to these scores, the tracking method can better determine the reliability of each position candidate.

Optionally, the determining comprises penalizing any first position candidate more than any second position candidate if the non-visibility score of the first position candidate indicates that the at least one pixel is not visible in the current frame whereas the non-visibility score of the second position candidate indicates that the at least one pixel is visible in the current frame. That is, when considering the plurality of position candidates, some of them may be discarded or given a low weight in the final determination. One criterion for doing so is to determine whether the position candidate corresponds to a position in which the pixel is visible in the current frame. If the pixel is not visible in the current frame (e.g. if the non-visibility score exceeds a threshold), the corresponding position candidate is likely to be unreliable. As a consequence, the tracking method may identify such a position candidate as a so-called first position candidate, being less likely than any second position candidate which is visible in the current frame. This increases the accuracy of the method. In addition, by sorting the position candidates into first position candidates and second position candidates and penalizing the first position candidates instead of merely discarding them, the tracking method ensures that the first position candidates remain ordered among them in case there is no second position candidate to retain as the likeliest candidate.

Optionally, the uncertainty is computed from at least one optical flow end-point-error in comparison to at least one predetermined threshold. The optical flow end-point-error is the error, measured e.g. in terms of a distance, between the position of a pixel as predicted by the optical flow and the actual position of that pixel in the current frame. The greater that error, the more uncertain the position candidate. In order to evaluate a related uncertainty score, the above-mentioned distance may be used as is or, desirably, the optical flow end-point-error may be compared to a threshold and considered e.g. reliable below the threshold, and not reliable above (or vice versa). One end-point-error may be determined for each optical flow, hence for each position candidate.

Optionally, the uncertainty is computed from the at least one optical flow end-point-error in comparison to a plurality of respectively increasing predetermined thresholds. That is, instead of comparing the optical flow end-point error to a single threshold, it is compared to a plurality of increasing thresholds. The related score may be computed as a combination of these different comparisons, e.g. a weighted average of the maps resulting from the various comparisons. For instance, a pixel being outside of a range defined by a tolerant threshold (i.e. a broad range) may be penalized more than a pixel being outside of a closer range but within the broad range.

Optionally, the video comprises at least one intermediate frame between the reference frame and the current frame, and each of the position candidates is obtained by chaining a position of the at least one pixel in a respective anchor frame with an optical flow from the respective anchor frame to the current frame, wherein the anchor frame is chosen among the reference frame and the at least one intermediate frame. In these embodiments, each position candidate may be built based on a respective anchor frame among the reference frame and the intermediate frames. Specifically, for a given anchor frame, the corresponding position candidate is estimated by chaining the position of the pixel in the anchor frame and an optical flow from the anchor frame to the current frame. In other words, the position of the pixel in the current frame is derived by applying or concatenating said optical flow to the position of the pixel in the anchor frame. Such position candidates may be estimated for a plurality of respective anchor frames. The number of position candidates may be less than or equal to the number of possible anchor frames, as not all of the intermediate frames and/or reference frame may be used as anchor frames.

The position of the pixel in the anchor frame may be estimated, e.g. if the anchor frame is an intermediate frame, or known, e.g. if the anchor frame is the reference frame. The optical flow from the anchor frame to the current frame may be calculated by means known per se in the art, e.g using at least one machine learning model, such as a convolutional neural network (CNN). In any case, as the anchor frame is closer to the reference frame than the current frame, the position of the pixel in the anchor frame is presumably a good springboard for estimating a position candidate for the pixel in the current frame.

It is noteworthy that the tracking method may take into account a single possible position for the pixel in each anchor frame. Thanks to this provision, the tracking is based on previously estimated/known positions, hence a limited number of position candidates for the current frame. These features therefore increase efficiency of the method. In addition, they also increase its robustness because, thanks to the plurality of position candidates, incorrect estimations in some intermediate frames can be ignored at a later frame (i.e. at the current frame) by choosing another position candidate. Accordingly, drift is reduced. This brings robustness to the tracking method, especially for long-term tracking.

Optionally, the position of the at least one pixel in the anchor frame is obtained recursively. In this way, the obtained position of the pixel in the anchor frame is more reliable, which makes the tracking method as a whole more accurate.

Optionally, the at least one pixel includes a dense selection of pixels of the video. Dense tracking of pixels in the video provides a more robust basis for various applications.

The present disclosure further relates to a system for tracking at least one pixel from a reference frame to a current frame in a video comprising the reference frame and the current frame, the at least one pixel having a known position in the reference frame, the system comprising:

- an estimating module for estimating a plurality of position candidates for the at least one pixel in the current frame, each position candidate being associated with an optical flow from the reference frame to the current frame;
- an evaluating module for evaluating at least one score for each of the position candidates based on the reference frame, the current frame and the optical flow;
- a determining module for determining the position of the at least one pixel in the current frame by selecting one of the position candidates or combining two or more of the position candidates based on the respective at least one score.

The system, referred to hereinafter as the tracking system, may be configured to carry out the above-mentioned tracking method, and may have part or all of the above-described features. The system may have the hardware structure of a computer.

The present disclosure further relates to a computer program set including instructions for executing the steps of the above-described tracking method when said program set is executed by one or more computers. This program set can use any programming language and take the form of source code, object code or a code intermediate between source code and object code, such as a partially compiled form, or any other desirable form.

The present disclosure further relates to a recording medium readable by at least one computer and having recorded thereon at least one computer program including instructions for executing the steps of the above-described tracking method. The recording medium can be any entity or device capable of storing the program. For example, the medium can include a mass memory device, such as hard drive. In general, mass memory devices suitable for tangibly embodying computer program instructions and data include all forms of non-volatile memory, including by way of example semiconductor memory devices, such as ROM, CD-ROM, EPROM, EEPROM, and flash memory devices; magnetic disks such as internal hard disks and removable disks; magneto-optical disks.

Alternatively, the recording medium can be an integrated circuit in which the program is incorporated, the circuit being adapted to execute the tracking method or to be used in its execution.

BRIEF DESCRIPTION OF THE DRAWINGS

Features, advantages, and technical and industrial significance of exemplary embodiments of the invention will be described below with reference to the accompanying drawings, in which like signs denote like elements, and wherein:

- Fig. 1 is a block diagram of a tracking system according to an embodiment;
- Fig. 2 is a flowchart of a tracking method according to an embodiment;
- Fig. 3 is a diagram illustrating an overall principle of the tracking method according to an embodiment;
- Fig. 4 is a diagram illustrating a score evaluation according to an embodiment.

## DETAILED DESCRIPTION OF EMBODIMENTS

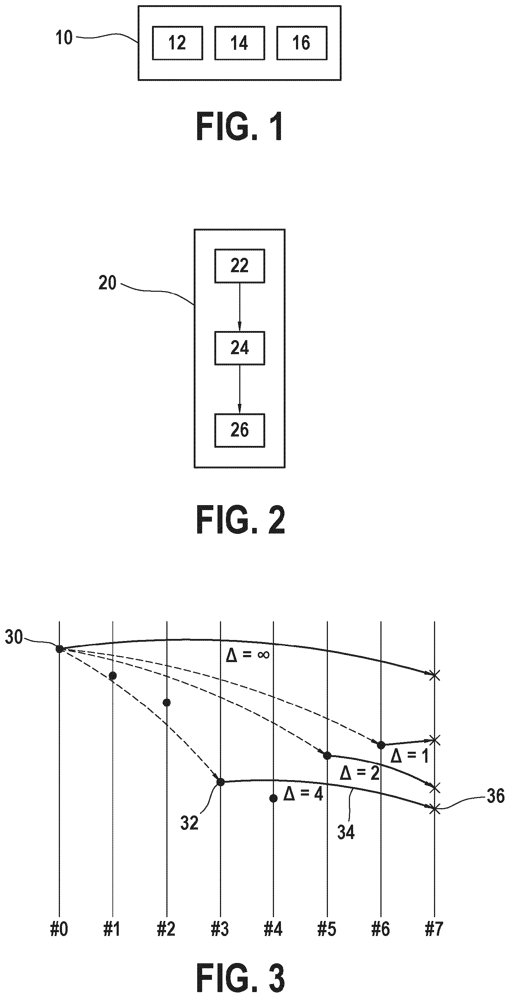

Figure 1 shows a block diagram of a tracking system 10 comprising an estimating module 12, an evaluating module 14 and a determining module 16 according to embodiments of the present disclosure. The tracking system 10 is a system for tracking at least one pixel from a reference frame to a current frame in a video comprising the reference frame and the current frame, and possibly at least one intermediate frame between the reference frame and the current frame. The at least one pixel has a known position in the reference frame.

The tracking system 10 may comprise an electronic circuit, a processor (shared, dedicated, or group), a combinational logic circuit, a memory that executes one or more software programs, and/or other suitable components that provide the described functionality. In other words, the tracking system 10 may be a computer device. The tracking system 10 may be connected to a memory, which may store data, e.g. at least one computer program which when executed, carries out the tracking method according to the present disclosure. In particular, the tracking system or the memory may store software which comprises the neural networks described hereinafter.

The tracking system 10 may have an input for receiving a sequence of frames, e.g. a video. In particular, the tracking system 10 may be connected to an optical sensor, in particular a digital camera. The digital camera is configured such that it can record a scene, and in particular output digital data to the tracking system 10.

If the tracking method is to be carried out in real time, the video may be acquired in real time by an image acquisition module, such as a video acquisition module, e.g. a camera or the like (video cameras, photo cameras, etc.). Alternatively or in addition, the video may be acquired beforehand, and obtained by the tracking system 10 later, e.g. in case of post-processing of the filmed process.

The estimating module 12 is a module for estimating a plurality of position candidates for the at least one pixel in the current frame, each position candidate being associated with an optical flow from the reference frame to the current frame. The estimating module 12 may be implemented as software running on the tracking system 10 or as a hardware element of the tracking system 10. The estimating module 12 estimates a plurality of position candidates for at least one pixel in a current frame of the video.

The evaluating module 14 is a module for evaluating at least one score for each of the position candidates based on the reference frame, the current frame and the optical flow. The evaluating module 14 may be implemented as software running on the tracking system 10 or as a hardware element of the tracking system 10.

The determining module 16 is a module for determining the position of the at least one pixel in the current frame by selecting one of the position candidates or combining two or more of the position candidates based on the respective at least one score. The determining module 16 may be implemented as software running on the tracking system 10 or as a hardware element of the tracking system 10.

In particular, the tracking system 10 may comprise a program which includes the estimating module 12, the evaluating module 14 and the determining module 16. Alternatively, any of these modules may be realized as an independent program or a plurality of independent programs.

The tasks carried out by the tracking system 10 are detailed hereinafter with respect to a corresponding tracking method, an embodiment of which is illustrated in Fig. 2. For the sake of intelligibility, a particular example of a method for estimating the position candidates is explained herein, that example relying on the aforementioned MFT; however, MFT could be replaced by any method suitable for estimating a plurality of position candidates for the pixel in the current frame, as long as that method produces - or it is possible to obtain afterwards - an optical flow between the reference frame and the current frame.

Figure 2 is a flowchart of a tracking method 20 according to an embodiment. As indicated above, the tracking method 20 is a method for tracking at least one pixel from a reference frame to a current frame in a video, assuming that the at least one pixel has a known position in the reference frame. The tracking method 20 may be used for long-term tracking of every pixel of a reference frame throughout a video.

The tracking method 20 comprises a step 22 of estimating a plurality of position candidates for the at least one pixel in the current frame. Each of the position candidates may be obtained by chaining a position of the at least one pixel in a respective anchor frame with an optical flow from the respective anchor frame to the current frame, wherein the anchor frame is chosen among the reference frame and the at least one intermediate frame. That is, the estimating step 22 relies on a plurality of optical flow fields computed over different time spans (e.g. from different anchor frames).

The principles of the estimating step 22, embodied with the example of MFT, are illustrated in Fig. 3. Figure 3 shows an example in which a video comprises 8 frames numbered from frame #0 to frame #7. Although generally two-dimensional, the frames are represented in one dimension (i.e. as a line) in Fig. 3 for simplicity.

In this example, frame #0 is chosen as the reference frame, and it is desired to track at least one pixel of reference frame #0 to frame #7, which is thus the current frame. Intermediate frames #1 to #6 separate the reference frame #0 from the current frame #7. As mentioned above, the number of frames of the video could vary, the reference frame needs not be the first frame, the current frame needs not be the last frame, and the reference frame needs not precede the current frame.

The estimating step 22 may consider a plurality of anchor frames different from the current frame #7, e.g. the reference frame #0 and intermediate frames #3, #5 and #6.

The frame difference between the current frame #7 and each anchor frame is noted as $\Delta$. For instance, for intermediate frame #6, $\Delta$=1. For intermediate frame #3, $\Delta$=4. $\Delta=\infty$ is used to refer to the difference between the current frame #7 and the reference frame #0, which is by construction the anchor frame farthest to the current frame #7 in the sequence of frames to track.

In order to give more weight to neighboring frames than to distant frames, the current frame #7 and the intermediate frames #6, #5, #3 serving as anchor frames may be increasingly spaced from one another in a direction from the current frame #7 to the reference frame #0. In this example, the current frame #7 and the intermediate frames #6, #5, #3 may be logarithmically spaced from one another, i.e. the frame difference $\Delta$ increases exponentially (here as 2"). The reference frame #0 may be included in the anchor frames or not irrespective of the increasing or logarithmical spacing of the intermediate frames.

A position of the tracked pixel is assumed to be known in each anchor frame. In the reference frame #0, the position 30 of the pixel is known of course; however, for the other anchor frames #3, #5, #6, the position 32 of the pixel may be estimated or otherwise obtained. For instance, the position of the pixel in frame #1 adjacent the reference frame #0 may be obtained by chaining the known position of the pixel in reference frame #0 and an optical flow from reference frame #0 to the adjacent frame #1. Position of the pixel in subsequent frames #2, #3, etc. may be obtained likewise from the position in the adjacent frame #1, by considering pairs of consecutive frames. However, advantageously, the position 32 of the pixel in an intermediate frame may be obtained in a recursive manner by applying the tracking method 20 itself to a fewer number of frames (because the current frame #7 is excluded). An iterative implementation will be detailed hereinafter.

In Fig. 3, the known position 30 or estimated position 32 of the pixel in every frame, or at least in every one of the anchor frames, is represented as a dot. A dashed arrow illustrates the overall displacement from reference frame #0 to the corresponding anchor intermediate frame #3, #5, #6, irrespective of whether this overall displacement was obtained as a direct single displacement or through a plurality of shorter displacements.

For every anchor frame, given the position of the pixel in this anchor frame, the estimating step 22 may chain said position with an optical flow 34 from the respective anchor frame to the current frame #7. The optical flow 34 is represented in Fig. 3 as a solid arrow. An example of chaining will be detailed hereinafter.

As can be seen in Fig. 3, for each anchor frame #0, #3, #5, #6, the chaining may lead to a different position candidate 36 in the current frame #7. Thus, a plurality of position candidates 36 for the pixel in the reference frame can be estimated, here four position candidates 36. This shows how one position candidate per anchor frame can be obtained.

With reference to Fig. 2, the tracking method 20 further comprises a step 24 of evaluating at least one score for each of the position candidates based on the reference frame, the current frame and the optical flow. Then, the tracking method 20 further comprises a step 26 of determining the position of the at least one pixel in the current frame by selecting one of the position candidates or combining two or more of the position candidates, based on the respective at least one score. Determining step 26 corresponds to a processing of the plurality of position candidates to determine the predicted position of the pixel in the current frame.

Although described in connection with one pixel, the tracking method 20 may apply to a plurality of pixels, e.g. a dense selection of pixels of the video (as opposed to a sparse selection of pixels). As the case may be, the estimating step 22, the evaluating step 24 and the determining step 26 may be carried out independently for each of the at least one pixel.

A detailed example is now described for illustration purposes. Although described with respect to all pixels and all frames, it is clear that the tracking method according to this embodiment adapts to some pixels only, and/or some frames only.

Given a sequence of video frames $\left(I_t\right)_{t=1}^{T}$ with $H \times W$ resolution, the tracking method computes long-term flow fields $\left(F_{1 \rightarrow t}\right)_{t=1}^{T}$ between the reference frame and the current frame. For a 2D position $p_A = (x, y)$ in image $I_A$, a flow field (or optical flow) $F_{A \rightarrow B}$ bilinearly sampled at $p_A$ gives a position in the image $I_B$ as $p_B = p_A + F_{A \rightarrow B}[p_A]$, where $\cdot[\cdot]$ is the bilinear sampling. The tracking method may also output binary segmentation maps $\left(O_t\right)_{t=1}^{T}$ such as non-visibility maps indicating that a point $p_1$ is occluded or out-of-view in frame $I_t$ when $O_t[p_1]$ is greater than a threshold, e.g. 0.5.

Both the flows $F_{1 \rightarrow t}$ and the non-visibility maps $O_t$ (or, for a given position candidate, the non-visibility score $O_t^{\Delta 1}$) may have the full $H \times W$ resolution. For the sake of conciseness but without loss of generality, the first frame $I_1$ of the video is referred to as the reference frame and a given frame $I_t$ as the current frame.

On the basis of these notations, an example of chaining following the principles set forth in reference to Fig. 3 may be as follows: following [REF. 1], on each anchor frame, the proposed tracking method constructs flow fields $F_{1 \rightarrow t}^{\Delta}$ as a *chain* of flow field $F_{1 \rightarrow (t-\Delta)}$ computed previously for an anchor frame number $t - \Delta$ and a flow field from the anchor frame to the current frame $F_{(t-\Delta) \rightarrow t}$. The chaining operation samples the second flow field at the positions given by the first one such that

$$F^{\Delta}_{1 \to t}[\boldsymbol{p}_1] = F_{(t-\Delta) \to t}\big[\boldsymbol{p}_1 + F_{1 \to (t-\Delta)}[\boldsymbol{p}_1]\big] \tag{1}$$

This can form an arbitrarily long chain of flows, as the $F_{1 \to (t-\Delta)}$ may itself be formed as a chain of flows.

The proposed tracking method differs from the original MFT approach in that instead of chaining the uncertainty scores, which may lead to drift and biased results, it estimates the scores in an independent manner which replaces the problematic chaining of uncertainties with a direct estimation of the quality of the chained optical flow. In an example, the best delta is selected per-pixel as

$$\Delta^{\star}[\boldsymbol{p}_1] = \arg \min_{\Delta \in \mathcal{D}} E^{\Delta}_t[\boldsymbol{p}_1] + M \cdot O^{\Delta}_t[\boldsymbol{p}_1], \tag{2}$$

where $M$ is a large constant used instead of the $\infty$ in [REF. 1]. This ensures that unoccluded chains are always preferred, but also preserves the ordering by $E^{\Delta}_t[\boldsymbol{p}_1]$ when all the candidate flow chains contain an occlusion. Thus, the determining comprises penalizing any first position candidate $F^{\Delta 1}_{1 \to t}[\boldsymbol{p}_1]$ more than any second position candidate $F^{\Delta 2}_{1 \to t}[\boldsymbol{p}_1]$ if the non-visibility score $O^{\Delta 1}_t[\boldsymbol{p}_1]$ of the first position candidate indicates that the at least one pixel is not visible in the current frame whereas the non-visibility score $O^{\Delta 2}_t[\boldsymbol{p}_1]$ of the second position candidate indicates that the at least one pixel is visible in the current frame.

The cost map $\boldsymbol{E}$, also referred to as the uncertainty score, may be designed so that lower values mean higher positional accuracy.

As mentioned above, the proposed tracking method differs from [REF. 1] in that the scores, e.g. the uncertainty score $\boldsymbol{E}$ and the non-visibility score $\boldsymbol{O}$, are evaluated as a function of the reference frame, the current frame and the optical flow, e.g. preferably directly as a function of the optical flow $F^{\Delta}_{1 \to t}$ and the two frames it relates to, $I_1$ and $I_t$.

$$\{E^{\Delta}_t, O^{\Delta}_t\} = \mathcal{Q}\big(F^{\Delta}_{1 \to t}, I_1, I_t\big). \tag{3}$$

The independent quality estimation function Q may be implemented as a machine learning model such as a neural network. It takes the optical flow, the reference frame, and the current frame as inputs and estimates the uncertainty score $\boldsymbol{E} \in \mathbb{R}^{H \times W}_{0+}$ and the non-visibility score $\boldsymbol{O} \in \{0,1\}^{H \times W}$.

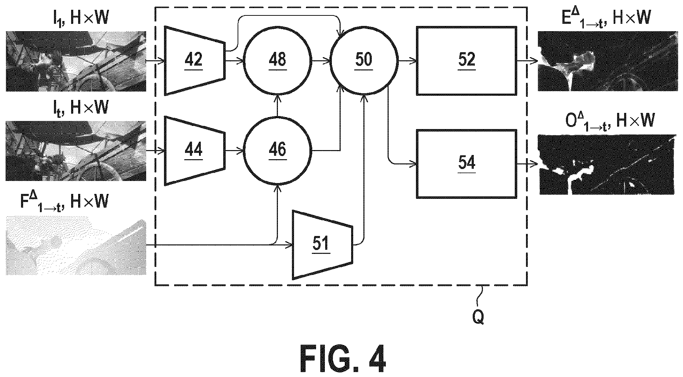

An example of the architecture and training of the proposed quality estimation network Q is detailed with reference to Fig. 4. For instance, the evaluating may comprise extracting reference features from the reference frame, e.g. through any suitable image encoder 42, and extracting current features from the current frame, e.g. through any suitable image encoder 44. In an example, both the reference frame $I_1$ and the current frame $I_t$ may be processed by a common encoder, e.g. the DinoV2 [REF. 2] network. To add more spatially fine-grained information, it is also possible to compute the ImageNet1K-pre-trained ResNet50 [REF. 3] CNN features and features from a shallow CNN. All the resulting feature maps may be resized into the desired (e.g. $\frac{1}{4}$) resolution and optionally compressed with a convolutional layer to have a desired number of channels (e.g. 32) each.

The next stage in the score evaluation is the calculation of a similarity between the corresponding (as predicted by the optical flow) features, while also considering adjacent pixel information.

To perform this, the current features from the current frame $I_t$ may be aligned, e.g. warped, to the reference features from the reference frame $I_1$, e.g. using the optical flow $F_{1 \to t}$, which is scaled to match the feature map resolution as the case may be. The alignment is designated by reference 46 in Fig. 4. Then, at reference 48, a similarity may be calculated, e.g. locally (for instance, maximum displacement of 3px on the feature map resolution), for each input feature map, like in FlowNet [REF. 4].

In an example, the similarity may be calculated through the formation of a local Correlation Cost Volume (CCV), however other types of similarities may be used instead, as mentioned previously. Finally, the feature similarities computed by the cost-volumes may be concatenated (reference 50) with the image features and features computed from the optical flow (reference 51). The resulting $\frac{H}{4} \times \frac{W}{4}$ featuremap with 424 channels (in this case, but the number of channels may be adapted) is then used to estimate the optical flow quality, and thus the quality of the position candidate.

In order to calculate the at least one score, e.g. the uncertainty and occlusion maps respectively, it is possible to use one or more machine learning models 52, 54, e.g. two three-layer CNN heads, each followed by a bilinear upsampling to the full image resolution if required. The occlusion estimation machine learning model 54 classifies each pixel as either occluded or non-occluded and may be trained using standard binary cross-entropy loss, denoted as $\mathcal{L}^{\mathrm{occl}}$.

The uncertainty may be computed from at least one optical flow end-point-error in comparison to at least one predetermined threshold, optionally from the at least one optical flow end-point-error in comparison to a plurality of respectively increasing predetermined thresholds. Specifically, the uncertainty score may be constructed from $N$ (e.g. $N$ = 5) binary classifiers, again trained by binary cross-entropy loss $\mathcal{L}^{\mathrm{match}\,\theta}$. Pixels that have the flow end-point-error (EPE, euclidean distance from the ground-truth) over $\theta$ px or are occluded belong to the positive class, while the visible and precisely matched pixels (EPE under $\theta$px) belong to the negative class. The binary classifiers differ in the EPE threshold $\theta \in \{1,2,3,4,5\}$, ranging e.g. from 1 to 5px.

During inference, the final uncertainty map may be constructed as a weighted average of the soft (e.g. sigmoid activation) classification maps $\boldsymbol{E}_\theta$, e.g.

$$\boldsymbol{E} = \sum_{\theta=1}^{N} 2^{\theta-1} \boldsymbol{E}_\theta. \tag{4}$$

More generally, in the uncertainty score, large errors are penalized more than small errors, which mitigates the binary character of the comparison with a threshold. The uncertainty map $\boldsymbol{E}$ should be low for well matched points and high for poorly matched or occluded points.

The overall training loss, $\mathcal{L}$, may be computed as follows:

$$\mathcal{L} = \frac{1}{H \times W} \sum_{i=1}^{H \times W} \boldsymbol{V}_i \left( \mathcal{L}_i^{\mathrm{occl}} + \frac{1}{N} \sum_{\theta=1}^{N} \mathcal{L}_i^{\mathrm{match}\,\theta} \right), \tag{5}$$

where $\boldsymbol{V}_i$ is a binary ground-truth validity flag of pixel $i$.

According to an example, the independent quality network $Q$ may be trained using a synthetic dataset from the Kubric rendering tool [REF. 5]. In an implementation example, the dataset includes 200 sequences with a variable number of static and dynamic objects rendered at a 1024 × 1024 resolution, each 240 frames long. The sequence length is much longer than the typically used 24 or 48 frames. In order to ensure that the objects do not become static after falling to the ground as in the default Kubric scenario, and keep the objects non-intersecting, the default Kubric physical engine was left to simulate the scene for 48 frames, after which it was disabled and the simulated motions were replayed back and forth for the rest of the video. The camera motion is generated independently, with the panning from TAPIR and a random camera shake to introduce motion blur and make the camera movement more realistic. Due to the independent non-looping motion of the camera, the resulting video is not repetitive and information-rich for the whole duration.

The training involved sampling random image pairs with temporal separations, i.e. the flow frame difference $\Delta$, ranging from 2 to 150 frames. A pre-sampled set of 20,000 training pairs with dense ground truth optical flow, occlusion, and validity masks $\boldsymbol{V}$ was generated. During each training iteration, the input optical flow chains were uniformly drawn from RAFT [REF. 6], ground-truth-initialized FlowFormer++ [REF. 7], and the ground truth flow. Both the optical flow and the input images were augmented and resized to 368 × 768 pixels.

The training was conducted on a single RTX A5000 GPU for approximately one day using a batch size of 8 for 200,000 iterations, with an initial learning rate of $2.5 \times 10^{-3}$ and OneCycleLR [REF. 8] learning rate policy. The anchor frames were chosen with $\Delta \in \{1,2,4,8,16,32,t - 1\}$

To speed up the proposed tracking method, intermediate results may be cached and re-used where possible. Namely, the image features are needed multiple times per frame and especially the DinoV2 network is slow, so the features may be cached in GPU memory. The optical flows could be cached as well, which is useful when tracking from multiple query frames. If the application allows it, both the image features and the optical flows can be precomputed to get fast tracking.

Experiments conducted by the inventors demonstrate that the proposed tracking method not only matches but often surpasses current state-of-the-art point-tracking methods in terms of accuracy and speed. Particularly, it shows significant improvements over the baseline MFT method. The capability of the tracking method to operate efficiently with various optical flow methods underscores its robustness and adaptability.

Specifically, the experiments showed that the RAFT-based proposed tracking method outperforms the original RAFT-based MFT [REF. 1]. More importantly, after training the proposed tracking method with one optical flow method, e.g. RAFT, the model may be fixed and used with other optical flow methods, e.g. more recent optical flow methods such as ROMA [REF. 9], and this usually increases the performance. This highlights that the proposed tracking method can be trained once and then work with an arbitrary optical flow method in a "plug-and-play" fashion, without any fine-tuning or architecture changes. This allows the user to choose a suitable speed/performance trade-off by using the appropriate flow.

The way the scores were calculated in MFT led MFT to often select the direct optical flow as the best position candidate, i.e. the flow chain with $\Delta = t - 1$ with probability increasing during the video. The probability of the direct flow to be accurate, however, decreases with time and choosing a different $\Delta$ would be preferable. In contrast, thanks to its direct and independent score evaluation, the proposed tracking method chooses the direct optical flow more conservatively and mostly when it has high accuracy.

Although the present disclosure refers to specific exemplary embodiments, modifications may be provided to these examples without departing from the general scope of the invention as defined by the claims. In particular, individual characteristics of the different illustrated/mentioned embodiments may be combined in additional embodiments. Therefore, the description and the drawings should be considered in an illustrative rather than in a restrictive sense.

**Claims**

1. A computer-implemented method for tracking at least one pixel from a reference frame to a current frame in a video comprising the reference frame and the current frame, the at least one pixel having a known position in the reference frame, the method comprising:

   - estimating (22) a plurality of position candidates for the at least one pixel in the current frame, each position candidate being associated with an optical flow from the reference frame to the current frame;
   - evaluating (24) at least one score for each of the position candidates based on the reference frame, the current frame and the optical flow;
   - determining (26) the position of the at least one pixel in the current frame by selecting one of the position candidates or combining two or more of the position candidates based on the respective at least one score.

2. The method of claim 1, wherein the at least one score is evaluated by a machine learning model (Q) taking the reference frame, the current frame and the optical flow as inputs.

3. The method of claim 1 or 2, wherein the evaluating (24) comprises extracting (42, 44) reference features from the reference frame and current features from the current frame, and aligning (46) the reference features and the current features to one another.

4. The method of claim 3, wherein the evaluating (24) comprises calculating (48) a similarity between the reference features and the current features after aligning.

5. The method of claim 4, wherein the similarity is calculated locally, optionally with one or more techniques selected among cost volume correlation, scalar multiplication, subtraction, cosine similarity.

6. The method of any one of claims 1 to 5, wherein the at least one score takes into account non-visibility of the position candidate and/or an uncertainty of the position candidate.

7. The method of claim 6, wherein the determining (26) comprises penalizing any first position candidate more than any second position candidate if the non-visibility score of the first position candidate indicates that the at least one pixel is not visible in the current frame whereas the non-visibility score of the second position candidate indicates that the at least one pixel is visible in the current frame.

8. The method of claim 6 or 7, wherein the uncertainty is computed from at least one optical flow end-point-error in comparison to at least one predetermined threshold, optionally from the at least one optical flow end-point-error in comparison to a plurality of respectively increasing predetermined thresholds.

9. The method of any one of claims 1 to 8, wherein the video comprises at least one intermediate frame between the reference frame and the current frame, and wherein each of the position candidates is obtained by chaining a position of the at least one pixel in a respective anchor frame with an optical flow from the respective anchor frame to the current frame, wherein the anchor frame is chosen among the reference frame and the at least one intermediate frame.

**10.** The method of claim 9, wherein the position of the at least one pixel in the anchor frame is obtained recursively.

**11.** The method of any one of claims 1 to 10, wherein the at least one pixel includes a dense selection of pixels of the video.

**12.** A system (10) for tracking at least one pixel from a reference frame to a current frame in a video comprising the reference frame and the current frame, the at least one pixel having a known position in the reference frame, the system comprising:

- an estimating module (12) for estimating a plurality of position candidates for the at least one pixel in the current frame, each position candidate being associated with an optical flow from the reference frame to the current frame;
- an evaluating module (24) for evaluating at least one score for each of the position candidates based on the reference frame, the current frame and the optical flow;
- a determining module (26) for determining the position of the at least one pixel in the current frame by selecting one of the position candidates or combining two or more of the position candidates based on the respective at least one score.

**13.** A computer program set including instructions for executing the steps of the method of any one of claims 1 to 11 when said program set is executed by at least one computer.

**14.** A recording medium readable by at least one computer and having recorded thereon at least one computer program including instructions for executing the steps of the method of any one of claims 1 to 11.

**Amended claims in accordance with Rule 137(2) EPC.**

**1.** A computer-implemented method for tracking at least one pixel from a reference frame to a current frame in a video comprising the reference frame and the current frame, the at least one pixel having a known position in the reference frame, the method comprising:

- estimating (22) a plurality of position candidates for the at least one pixel in the current frame, each position candidate being associated with a corresponding optical flow from the reference frame to the current frame;
- evaluating (24) at least one score for each of the position candidates based on the reference frame, the current frame and the optical flow;
- determining (26) the position of the at least one pixel in the current frame by selecting one of the position candidates or combining two or more of the position candidates based on the respective at least one score,

**characterized in that** the at least one score is evaluated by a machine learning model *(Q)* taking the reference frame, the current frame and the optical flow as inputs, wherein the evaluating (24) comprises extracting (42, 44) reference features from the reference frame and current features from the current frame, and aligning (46) the reference features and the current features to one another.

**2.** The method of claim 1, wherein the evaluating (24) comprises calculating (48) a similarity between the reference features and the current features after aligning.

**3.** The method of claim 2, wherein the similarity is calculated in a neighborhood of the position candidate, optionally with one or more techniques selected among cost volume correlation, scalar multiplication, subtraction, cosine similarity.

**4.** The method of any one of claims 1 to 3, wherein the at least one score takes into account non-visibility of the position candidate and/or an uncertainty of the position candidate.

**5.** The method of claim 4, wherein the determining (26) comprises penalizing any first position candidate more than any second position candidate if the non-visibility score of the first position candidate indicates that the at least one pixel is not visible in the current frame whereas the non-visibility score of the second position candidate indicates that the at least one pixel is visible in the current frame.

**6.** The method of claim 4 or 5, wherein the uncertainty is computed from at least one optical flow end-point-error in comparison to at least one predetermined threshold, wherein the optical flow end-point-error is the error between the position of a pixel as predicted by the optical flow and the actual position of that pixel in the current frame, optionally wherein the uncertainty is computed from the at least one optical flow end-point-error in comparison to a plurality of respectively increasing predetermined thresholds.

7. The method of any one of claims 1 to 6, wherein the video comprises at least one intermediate frame between the reference frame and the current frame, and wherein each of the position candidates is obtained by concatenating a position of the at least one pixel in a respective anchor frame with an optical flow from the respective anchor frame to the current frame, wherein the anchor frame is chosen among the reference frame and the at least one intermediate frame.

8. The method of claim 7, wherein the position of the at least one pixel in the anchor frame is obtained recursively.

9. The method of any one of claims 1 to 8, wherein the at least one pixel includes a dense selection of pixels of the video.

10. A system (10) for tracking at least one pixel from a reference frame to a current frame in a video comprising the reference frame and the current frame, the at least one pixel having a known position in the reference frame, the system comprising:

   - an estimating module (12) for estimating a plurality of position candidates for the at least one pixel in the current frame, each position candidate being associated with a corresponding optical flow from the reference frame to the current frame;
   - an evaluating module (24) for evaluating at least one score for each of the position candidates based on the reference frame, the current frame and the optical flow;
   - a determining module (26) for determining the position of the at least one pixel in the current frame by selecting one of the position candidates or combining two or more of the position candidates based on the respective at least one score,

   **characterized in that** the evaluating module (24) is configured to evaluate the at least one score by a machine learning model ($Q$) taking the reference frame, the current frame and the optical flow as inputs, wherein the evaluating comprises extracting (42, 44) reference features from the reference frame and current features from the current frame, and aligning (46) the reference features and the current features to one another.

11. A computer program set including instructions for executing the steps of the method of any one of claims 1 to 9 when said program set is executed by at least one computer.

12. A recording medium readable by at least one computer and having recorded thereon at least one computer program including instructions for executing the steps of the method of any one of claims 1 to 9.

FIG. 1

FIG. 2

FIG. 3

**FIG. 4**

Europäisches
Patentamt

European
Patent Office

Office européen
des brevets

## EUROPEAN SEARCH REPORT

**Application Number**

EP 24 20 3673

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CONZE PIERRE-HENRI ET AL: "Multi-reference combinatorial strategy towards longer long-term dense motion estimation", COMPUTER VISION AND IMAGE UNDERSTANDING, ACADEMIC PRESS, US, vol. 150, 20 May 2016 (2016-05-20), pages 66-80, XP029628348, ISSN: 1077-3142, DOI: 10.1016/J.CVIU.2016.04.013 | 1,3-5, 11-14 | INV. G06T7/246 G06T7/269 |
| Y | * the whole document * | 2,6-10 | |
| Y | NEORAL MICHAL ET AL: "MFT: Long-Term Tracking of Every Pixel", 2024 IEEE/CVF WINTER CONFERENCE ON APPLICATIONS OF COMPUTER VISION (WACV), IEEE, 3 January 2024 (2024-01-03), pages 6823-6833, XP034582998, DOI: 10.1109/WACV57701.2024.00669 [retrieved on 2024-04-09] * abstract * * sections 3.1 and 3.2; page 6826; figure 4 * * page 6828, column 1, paragraph 4; figure 1 * | 2,6-10 | |
| A | MARIUS PEDERSEN: "Full-Reference Image Quality Metrics: Classification and Evaluation", FOUNDATIONS AND TRENDS IN COMPUTER GRAPHICS AND VISION, vol. 7, no. 1, 1 January 2011 (2011-01-01), pages 1-80, XP055119441, ISSN: 1572-2740, DOI: 10.1561/0600000037 * page 4 - page 5 * | 5 | |

**TECHNICAL FIELDS SEARCHED (IPC)**

G06T

The present search report has been drawn up for all claims

| Place of search | Date of completion of the search | Examiner |
|---|---|---|
| Munich | 7 March 2025 | Frias Velazquez, A |

EPO FORM 1503 03.82 (P04C01)

## REFERENCES CITED IN THE DESCRIPTION

**Non-patent literature cited in the description**

- **MAXIME OQUAB** ; **TIMOTHÉE DARCET** ; **THÉO MOUTAKANNI** ; **HUY VO** ; **MARC SZAFRANIEC** ; **VASIL KHALIDOV** ; **PIERRE FERNANDEZ** ; **DANIEL HAZIZA** ; **FRANCISCO MASSA** ; **ALAAELDIN EL-NOUBY et al.** Dinov2: Learning robust visual features without supervision.. *arXiv preprint arXiv:2304.07193*, 2023
- **KAIMING HE** ; **XIANGYU ZHANG** ; **SHAOQING REN** ; **JIAN SUN**. Deep residual learning for image recognition.. *Proceedings of the IEEE conference on computer vision and pattern recognition*, 2016, 770-778
- **ALEXEY DOSOVITSKIY** ; **PHILIPP FISCHER** ; **EDDY ILG** ; **PHILIP HÄUSSER** ; **CANER HAZIRBA** ; **VLADIMIR GOLKOV** ; **PATRICK VAN DER SMAGT** ; **DANIEL CREMERS** ; **THOMAS BROX**. *Flownet: Learning optical flow with convolutional networks. In ICCV*, December 2015, 2758-2766
- **KLAUS GREFF** ; **FRANCOIS BELLETTI** ; **LUCAS BEYER** ; **CARL DOERSCH** ; **YILUN DU** ; **DANIEL DUCKWORTH** ; **DAVID J FLEET** ; **DAN GNANA-PRAGASAM** ; **FLORIAN GOLEMO** ; **CHARLES HERRMANN et al.** Kubric: A scalable dataset generator.. *Proceedings of the IEEE/CVF Conference on Computer Vision and Pattern Recognition*, 2022, 3749-3761

- RAFT: Recurrent all-pairs field transforms for optical flow.. **ZACHARY TEED** ; **JIA DENG**. European Conference on Computer Vision. Springer, 2020, 402-419
- **XIAOYU SHI** ; **ZHAOYANG HUANG** ; **DASONG LI** ; **MANYUAN ZHANG** ; **KA CHUN CHEUNG** ; **SIMON SEE** ; **HONGWEI QIN** ; **JIFENG DAI** ; **HONGSHENG LI**. FlowFormer++: Masked cost volume autoencoding for pretraining optical flow estimation.. *Proceedings of the IEEE/CVF Conference on Computer Vision and Pattern Recognition*, 2023, 1599-1610
- **LESLIE N SMITH** ; **NICHOLAY TOPIN**. Superconvergence: Very fast training of neural networks using large learning rates.. *Artificial intelligence and machine learning for multi-domain operations applications*, 2019, vol. 11006, 369-386
- **JOHAN EDSTEDT** ; **QIYU SUN** ; **GEORG BÖKMAN** ; **MÅRTEN WADENBÄCK** ; **MICHAEL FELSBERG**. RoMa: Revisiting robust losses for dense feature matching.. *Proceedings of the IEEE/CVF Conference on Computer Vision and Pattern Recognition*, 2024, 19790-19800